Europäisches Patentamt

European Patent Office

Office européen des brevets

(11) Publication number: **0 124 198**
A1

(12) # EUROPEAN PATENT APPLICATION

(21) Application number: **84300688.3**

(22) Date of filing: **03.02.84**

(51) Int. Cl.³: **B 27 B 19/09**

(30) Priority: **07.02.83 US 464634**

(43) Date of publication of application: **07.11.84**
Bulletin 84/45

(84) Designated Contracting States: **AT BE CH DE FR GB IT LI NL SE**

(71) Applicant: **SKIL NEDERLAND B.V., Konijnenberg 60 P.O. Box 3267, NL-4800 DT Breda (NL)**

(72) Inventor: **Hartmann, James R., 5407 N. Linder Ave. Chicago, Illinois 60630 (US)**
Inventor: **Vassos, Louis, 14 Glenlake Park Ridge, Illinois 60068 (US)**

(74) Representative: **Abble, Andrew Kenneth et al, A.A. THORNTON & CO. Northumberland House 303/306 High Holborn, London, WC1V 7LE (GB)**

(54) Adjustable orbital reciprocating saw.

(57) The jigsaw has a drive gear carrying an eccentrically mountred drive pin forming part of a Scotch-yoke mechanism for reciprocating the plunger (24) and bladeholder along a generally longitudinal axis. The plunger (24) is held by a pair of spaced swivel bearing (60); the lower bearing (64) mounted to the housing (12) while the upper bearing (66) is mounted for oscillatory movement in a bearing carriage (68). Drive means synchronized to the reciprocal motion of the plunger (24) urge oscillatory movement of the bearing carriage (68) and upper bearing (66) thereby causing orbital motion of the blade (86). A knob (22) on the top of the housing (12) adjustable limits or inhibits the oscillatory movement of the bearing carriage thereby permitting ready and convenient adjustment of the orbital blade motion.

ACTORUM AG

ADJUSTABLE ORBITAL RECIPROCATING SAW

The invention relates to a reciprocating saw, such as a jigsaw, and more particularly to the arrangement of developing reciprocal orbital motion of a jigsaw blade by causing the oscillatory movement of the upper plunger bearing and, further, to an adjustment mechanism conveniently located on the upper portion of the housing limiting the orbital path traced out by the reciprocating saw blade by correspondingly restricting the oscillatory movement of the upper bearing.

It has long been known in the art that it is advantageous to cause the saw blade to traverse a closed path, such as an elliptical path. This has been achieved by imparting to the saw blade a reciprocating movement transverse to and synchronized with the generally longitudinal vertical motion of the saw bladeholder or plunger. Many arrangements have been proposed in the past to produce this motion.

One such arrangement is shown in Papworth, U.S. Patent Nos. 2,775,272, 2,781,800, 2,931,402, 2,984,757; Kaufman, U.S. Patent No. 3,374,814; and Walton, U.S. Patent Nos. 4,238,884 and 4,240,204, wherein a roller acting against the rearward non-cutting edge of the saw blade forces the saw blade and lower plunger forwardly in synchronization to the reciprocal blade motion thereby imparting the desired orbital motion. The upper plunger bearings are generally constrained to pivotal motion only. Bruck, U.S. Patent No. 2,946,358 achieves a similar result utilizing specially contoured saw blades against a stationary roller or cam. Several of the above saws include means for adjusting the orbital path of the saw blade. In each case, however, the adjustment must necessarily be located on the lower portion of the frame adjacent the roller thereby rendering convenient orbital adjustment difficult or impossible, particularly during operation of the saw.

Other prior art apparatus which effect orbital motion by similarly causing the transverse reciprocal movement of the lower plunger while pivotally constraining the upper plunger bearing include Papworth, U.S. Patent Nos. 2,879,815, 2,917,088, 2,961,016, Bauer, U.S. Patent No. 3,890,708 and Pfanzer, U.S. Patent No. 4,137,632. These devices generally utilize a bell crank or an eccentric and often include interconnecting linkages to drive the plunger. In Bauer '708, the eccentric drives a reciprocating cam while in Papworth '016 the eccentric functions as a cam forcing the requisite lateral motion of the lower plunger. Pfanzer '632 includes a face cam which acts upon the lower bearing. Again, the positioning of the orbital drive apparatus to impart the needed transverse motion to the plunger results in the placement of adjustment mechanism, where provided, inconveniently at the bottom of the saw.

Drive mechanisms which impart the requisite transverse motion to the upper end of the plunger are known to the art. U.S. Patent No. 2,137,893 to Elder, for example, utilizes an eccentric crank connected to the top of the plunger to achieve orbital blade motion. Orbital motion in Leach, U.S. Patent No. 3,457,796, is accomplished by an eccentric pin which rides within a channel of a crosshead connected to the upper end of the plunger; the crosshead is disposed at an angle thereby imparting a rocking movement to the blade as the pin travels back and forth through the channel in the crosshead. Neither of these structures contains, nor is suitable for, a top mounted adjustment mechanism. Another prior art method for imparting transverse motion to the upper end of plunger is shown in U.S. Patents 3,095,748 to Stelljes; 3,388,728 to Riley; No. 3,204,470 to Brucker; Nos. 3,206,989 and 3,269,197 to Enders; and No. 3,226,111 to Naslund. Each of these devices includes a slot or surface inclined at a slight angle to the axis of the plunger, such surface defining the path of the upper end of the plunger. Adjustment means may be provided on the side of the frame as shown for example in Naslund '111 or Enders '197. These mechanisms however permit adjustment from the side only and do not provide for an easy-to-use or knob-integrated actuator such as shown by this invention.

The reciprocating saw of this invention provides a unique plunger bearing and drive mechanism for imparting orbital blade movement which facilitates orbital path adjustment from a top located actuator preferably associated with the operating knob on the upper frame. In particular, the upper bearing is advantageously retained within a bearing carriage assembly adapted to oscillatory motion within the housing thereby causing the transverse upper bearing movement necessary to impart orbital blade motion. Oscillatory movement of the carriage assembly may be accomplished in any convenient manner but preferably includes a bell crank, eccentric or cam driven mechanism adapted to impart a pushing force upon the carriage assembly in one direction only. A biasing force to urge the bearing carriage assembly in the return direction may be provided by a spring type member or the force of the workpiece acting upon the blade and transmitted back to the upper bearing may advantageously be used without need for additional biasing means.

The upper bearing carriage assembly and unidirectional carriage drive of this invention are uniquely suited to continuous and convenient adjustment from a top-located actuator often integral with an upper housing knob structure for ease of use. In particular, the adjustment mechanism of this invention includes a stop element continuously positionable between complete stopping engagement of the carriage assembly thereby precluding all orbital motion of the plunger and complete disengagement whereby full orbital motion over the entire cutting cycle is permitted.

The stop element preferably comprises a pinion gear threadably attached to a fixed stud and adapted for axial movement along the stud upon rotation of the pinion. The pinion is operated by an actuator concentrically positioned within the fixed knob and having an annular gear rack thereon. Alternatively, the actuator may include a face cam functioning, itself, as the carriage assembly stop element.

It is therefore an object of this invention to provide in a reciprocating saw an orbital motion and, in particular, to impart the requisite transverse motion to the upper portion of the plunger thereby facilitating convenient adjustment of the orbital path from the top of the housing or frame. It is a further object that the mechanism for imparting the transverse motion include an upper bearing carriage assembly adapted for oscillatory motion and that the drive mechanism positively engage and urge the carriage assembly only in a first direction corresponding to forward blade advancement into the workpiece. It being a further object of this invention that the return oscillatory movement of the carriage assembly be limited by a stop element adjustably positionable from the top of the saw housing and, in particular, that the orbital adjustment may advantageously be incorporated into the knob or handle conventionally on the saw housing.

## Brief Description of the Drawings

Figure 1 is a side elevation view, partially in section, showing a jigsaw embodying the present invention;

Figure 2 is a plan view of the upper swivel bearing and bearing carriage assembly including pivot pin and pin bearings;

Figure 3 is an elevation view of the bearing carriage assembly;

Figure 4 is a section taken along line 4-4 of Figure 3 showing the upper swivel bearing in the bearing carriage assembly and, additionally, showing pivot pin and pin bearings;

Figure 5 is a fragmentary sectional view along line 5-5 of Figure 1 illustrating the relationships between the pusher, pusher eccentric, counterweight and counterweight eccentric;

Figures 6A, 6B and 6C graphically represent several of the possible paths of movement of a jigsaw blade attached to a saw emboding the present invention;

Figure 7 is a plan view of the top-mounted, calibrated orbital adjustment knob of the present invention;

Figure 8 is a side elevation view, partially in section, showing an alternative embodiment of the jigsaw of the present invention;

Figure 9 is a side elevation view, partially in section, showing an alternate embodiment of the orbital adjustment mechanism embodied in this invention; and

Figure 10 is a side elevation view, partially in section, showing yet another alternative embodiment of the orbital adjustment mechanism embodied in this invention.

### Description of the Preferred Embodiment

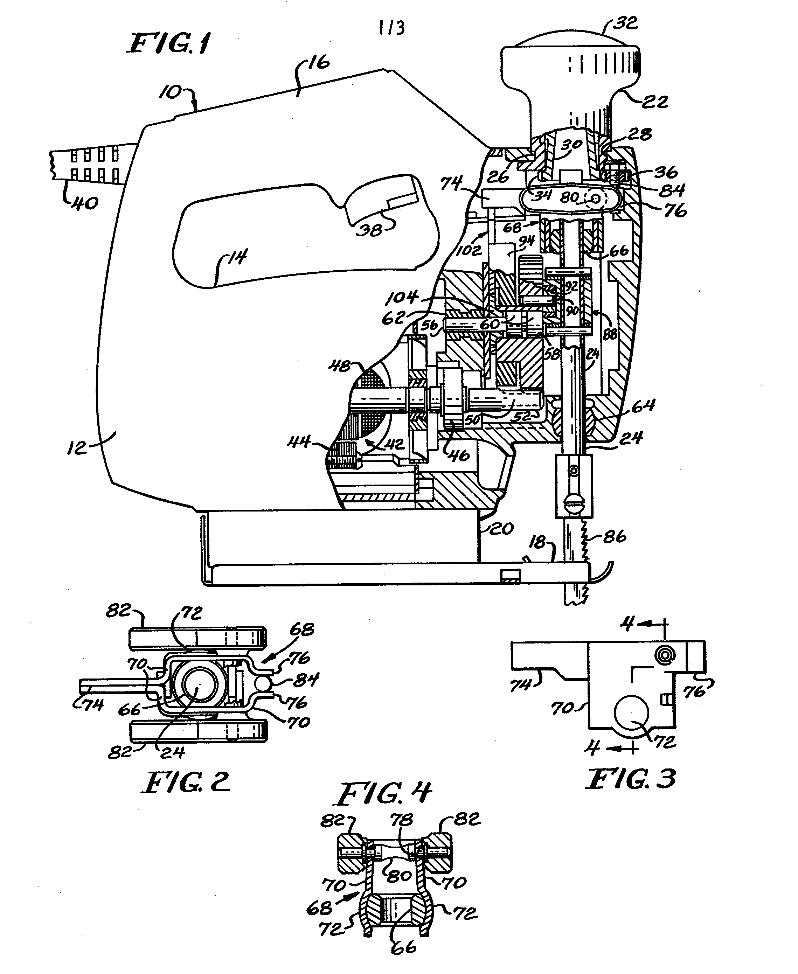

Referring to Figure 1, the electrically motor driven jigsaw 10 of this invention includes a housing 12 having an opening 14 therein defining a handle 16. The housing comprises various members including a pair of complementary sides which are mated following assembly of the components described below. Shoe 18 is supported by, and positioned below, housing 12 by leg 20.

A knob 22 is positioned on the housing forwardly of handle 16 and generally above bladeholder shaft or plunger 24. The knob includes an annular recess 26 which is received within a circular aperture in the housing. Concentrically retained within the interior of the knob and extending therethrough is an orbital adjustment control or actuator 30. The top region of actuator 30 extends above fixed knob 22 and is conveniently accessible to the jigsaw user to permit effortless and instantaneous adjustment of the orbital blade motion even while the saw is in full operation. An annular gear rack 34 along the bottom of actuator 30 engages axially extensible pinion gear 36 as shall be described in further detail below.

An electrical push button switch 38 protrudes into opening 14 from handle 16 thereby facilitating connection by the user of a standard source of electrical energy 40 to a conventional electric motor 42 as desired. Motor 42 is integrally fabricated into housing 12 having stator 44 rigidly anchored to housing 12 and having front and rear bearings 46 (rear bearing not shown) retaining armature 48 for rotation therein.

The forward end of armature shaft 50 contains gear teeth 52 which engage drive gear 54. Drive gear 54 is mounted for rotational motion on fixed shaft 56. A bore 58 centered on the axis of gear 54 receives a pair of annular sleeve bearings 60 positioned on shaft 56. Shaft 56 is rigidly affixed to the housing by sleeve 62.

Plunger 24 is retained for generally axial movement within the housing by lower swivel bearing 64 and upper swivel bearing 66. Lower bearing 64 is retained within an opening in the housing provided precluding lateral movement thereof. The bearing may freely swivel or rotate within the housing thereby permitting limited axial realignment of plunger 24 as necessary to effect orbital blade motion.

The upper swivel bearing 66 is contained within a bearing carriage assembly 68 best illustrated in Figures 2, 3 and 4. Bearing carriage assembly 68 comprises a complementary pair of bearing retention members 70 having dimples 72 to receive and retain the bearing therein. In addition, the mated retention members define a pivot arm 74, a pivot stop arm 76, and, further, are provided with holes 78 which receive a pin 80. Pin 80 functions to retain the carriage assembly and bearing for pivotal rotation and is securely mounted for pivotal rotation by support bearings 82 positioned in recesses provided in housing 12. Openings are provided through carriage assembly 68 to permit the unrestricted passage of plunger 24 and threaded pinion retention post 84. In this manner, and referring to Figure 1, bearing carriage assembly 68, with upper swivel bearing 66 therein, is free to pivot (as discussed more fully below) in oscillatory fashion about pin 80. Such pivotal motion of bearing 66 translates into forward and aft movements of the bearing transverse to the axis of plunger 24 which, in turn, forces the upper end of this shaft into corresponding transverse motion as required to impart orbital motion to a saw blade 86 attached to the lower end of the plunger 24.

Axial or reciprocal cutting motion of the saw blade and plunger within bearings 64 and 66 is provided by a Scotch-yoke assembly 88 which functions in the conventional manner to translate the rotational motion of the drive gear into the requisite reciprocal linear blade movement. Scotch-yoke 88 is secured to plunger 24 generally at the mid-region thereof. A pin 90 is rigidly affixed to drive gear 54 eccentric to the rotational axis thereof, and through bearing 92 thereon, operatively interconnects the drive gear and Scotch-yoke.

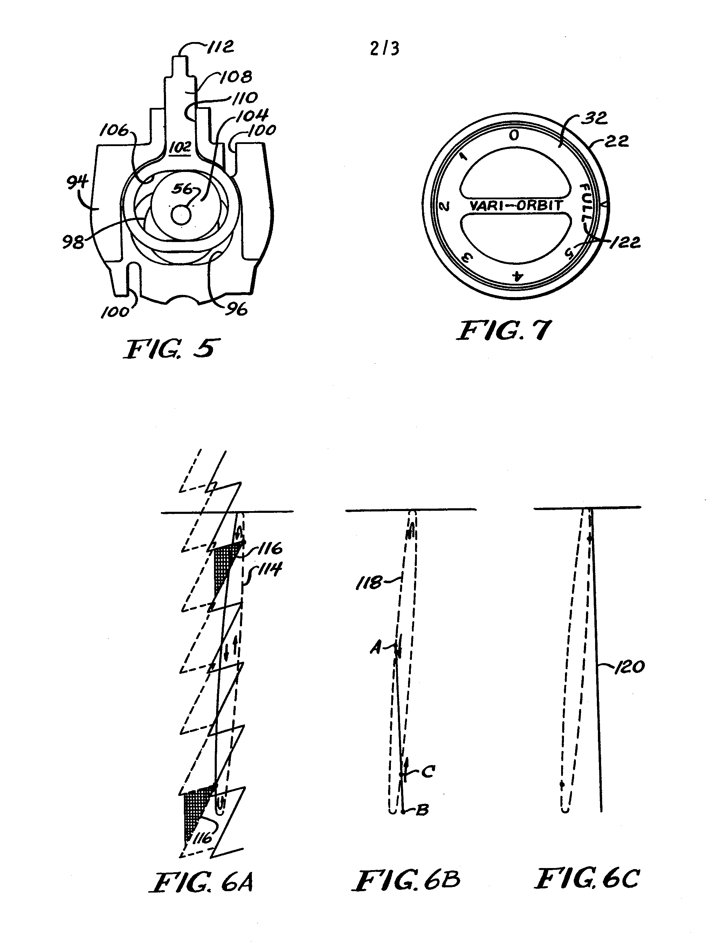

A counterweight 94 is provided to offset or cancel the vibration otherwise introduced by the reciprocating mass comprising the blade, plunger and Scotch-yoke assemblies. As best illustrated in Figures 1 and 5, counterweight 94 contains an elongated opening 96 adapted to receive eccentric 98 integrally formed with drive gear 54. A pair of pins (not shown) extending from housing 12 engage counterweight slots 100 thereby limiting the travel of the counterweight to the vertical direction substantially parallel to the axis and travel of plunger 24. Drive pin 90 and eccentric 98 are disposed on opposite sides of the drive gear axis, as defined by shaft 56, which forces counterweight 94 to reciprocate in opposition to the plunger assembly. Thus, the counterweight travels upwardly while the plunger assembly travels downwardly and visa-versa.

The upper bearing carriage assembly 68 is pivotally reciprocated in synchronism with the plunger assembly generally be means of pusher 102 which engages carriage assembly handle 74. Specifically, an eccentric or cam 104 positioned on shaft 56 is keyed to engage drive gear 54 in a predetermined fixed relationship as shown in Figure 5 in which the cam is located slightly clockwise of top-dead-center when the counterweight eccentric 98 is positioned at bottom-dead-center. Locked in this relationship by splines, cam 104 is rotably driven by gear 54.

Pusher 102 includes an elongated opening 106, similar to opening 96 in the counterweight, which operatively receives cam 104. Pusher 102 further includes an extension or arm 108 which is maintained in a vertical orientation within a channel 110 provided in counterweight 94. In this manner, pusher 102 is reciprocated in synchronism with gear 54, counterweight 94 and, most significantly with plunger 24. Pusher 102 achieves its maximum upward travel approximately 30 degrees (one complete stroke equals 360 degrees) before plunger 24 reaches its upward limit.

During the upward half-stroke of pusher 102, pusher tip 112 generally contacts arm 74 forcing carriage assembly 68 to pivot clockwise, as viewed in Figure 1, about pin 80. This clockwise pivotal motion of the carriage assembly causes upper bearing 66 and the upper portion of the plunger to move substantially transverse to the plunger axis in a rearward direction. Since the lower swivel bearing 64 precludes transverse plunger movement, the rearward travel of the upper bearing translates into forward transverse motion of the lower portion of the plunger assembly and, in particular, saw blade 86 itself.

It should be observed that the force of the workpiece acting rearwardly against saw blade 86 translates into a force acting forwardly upon upper swivel bearing 66. This force urges the counterclockwise rotation of the carriage assembly and acts to bias the assembly and arm 74 against pusher 102. Consequently, as pusher 102 retraces its path to the lowest point of travel, thereby completing one full cutting stroke, arm 74 generally maintains engagement with the pusher. This results in the saw blade returning to its original, most rearward, position.

The above description defines normal saw operation wherein full orbital blade movement is achieved. In this configuration, the saw blade is characterized by continuous motion both in the vertical and in the transverse directions as illustrated in Figure 6A. The elliptical curve denoted by solid line 114 of Figure 6A illustrates the path of a typical saw blade tooth 116 during full orbital operation of the saw wherein the blade moves forwardly into the workpiece during the upward cutting stroke and backwardly away from the workpiece during the return or downward stroke.

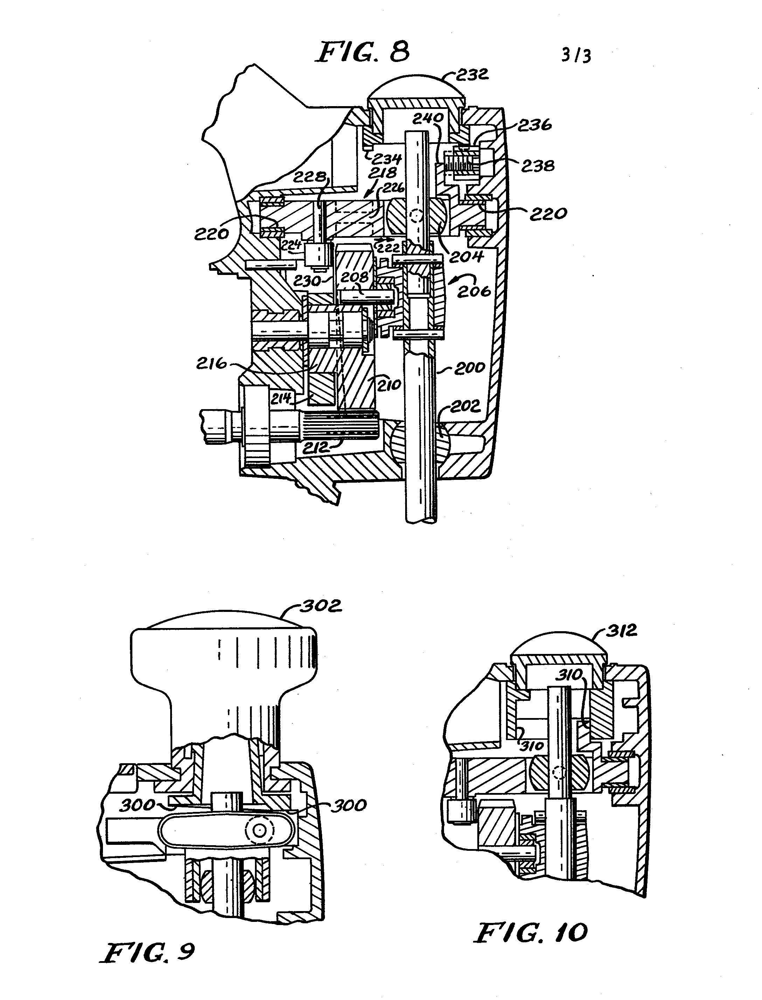

The unique and flexible orbital adjustment provided by this invention, however, facilitates rapid modification of the full orbital path shown in Figure 6A to any reduced orbital path such as shown by curve 118, Figure 6B, or to no orbital component whatsoever as illustrated by curve 120 of Figure 6C. The orbital adjustment is preferably incorporated into the knob on the housing, Figure 1, above the plunger, if provided, or alternatively, immediately above the plunger on the housing, Figures 8 and 10.

As shown in Figure 1, a knob 22 is provided which serves as a means for grasping the jigsaw during operation thereof. To facilitate effortless readjustment of the orbital path, adjustment actuator 30 is concentrically positioned within knob 22 and includes an adjustment knob 32 having calibrations 122 thereon, Figure 7, to indicate the degree of orbital motion selected. Readjustment of the orbital path by operation of knob 32 can be accomplished without resort to the use of tools and, significantly, while the saw is in full operation.

Specifically, alteration of the orbital path is achieved by an adjustable stop pinion gear 36 threadably retained on a post 84 secured to the housing. The annular gear rack 34 on the bottom of actuator 30 engages pinion 36 thereby permitting the axial position of the pinion along post 84 to be adjusted by rotation of actuator knob 32. In the full orbital mode, described above, the pinion gear is threaded upwardly from the bearing carriage assembly 68 a sufficient distance that contact between the carriage assembly 68 and pinion 36 is avoided throughout the complete stroke of the orbital saw.

However, as knob 32 is rotated from the "Full" orbital setting, the corresponding rotation of pinion 36 causes the pinion to advance downwardly along post 84 increasingly restricting the return counterclockwise movement of carriage assembly 68. As discussed above, the force of the workpiece acting upon blade 86 creates this counterclockwise movement which, in turn, biases arm 74 into continuous contact with pusher 102 during the downward portion of the pusher stroke.

For intermediate orbital settings, the return rotation of the carriage assembly is blocked when stop arm 76 contacts pinion 36. As the pusher 102 completes its downward stroke, engagement between the pusher and the carriage pivot arm 74 is broken precluding further orbital travel of the saw blade. Figure 6B illustrates a typical intermediate orbital setting wherein "A" represents the point at which rotation of the carriage assembly is precluded by stop pinion 36. Although the bearing carriage assembly is no longer operatively coupled to pusher 102, the blade and plunger assemblies complete their downward travel to "B" due to the engagement of drive gear 54 and Scotch-yoke 88.

Orbital motion of the blade commences on the upward stroke at "C" as pusher 102 again contacts pivot arm 74 causing the clockwise rotation of the carriage means. As discussed, points "A" and "C" of Figure 6B correspond, respectively, to the pusher disengaging and engaging the carriage assembly. Engagement and disengagement occurs at differing positions along the downward and upward stroke due to the fact that eccentric cam 104 is offset from eccentric pin 90 such that the pusher 102 reaches the top and bottom of its stroke approximately 30 degrees in advance of blade 86. It can be appreciated that adjustment knob 32 permits the continuous adjustment of pinion 36 thereby facilitating any degree of orbital motion between "Full" (Figure 6A) and "0" (Figure 6C). In Figure 6C, pinion 36 constrains carriage assembly 68 in its fully clockwise position whereby pusher 102 does not operatively engage pivot arm 74 at any point during a complete stroke.

An alternative embodiment of this invention is shown in Figure 8. The principal reciprocating drive mechanism illustrated in Figure 8 is substantially the same as described above with respect to Figure 1 and includes a plunger 200 retained within swivel bearings 202 and 204 for substantially axial movement therein, a Scotch-yoke assembly 206 driven from an eccentrically mounted pin 208 on a drive gear 210 which, in turn, is driven directly from motor armature shaft 212 and a counterweight 214 on drive gear eccentric 216.

The upper bearing carriage assembly 218 includes a pair of sleeve bearings 220 on opposed ends of the carriage assembly adapted to retain the carriage means for linear motion within the housing. As illustrated by arrow 222, the carriage assembly is limited to forward and aft movement which, in turn, carries upper swivel bearing 204 along a path transverse to the axis of plunger 200 similar to that of bearing 66 discussed above.

A roller bearing 224 is positioned below the main carriage frame 226 on a pin 228 and is adapted to contact face cam 230 on drive gear 210. During the upward or cutting stroke of plunger 200, face cam 230 acting upon bearing 224 forces carriage assembly 218 with swivel bearing 204 thereon rearwardly. The rearward transverse motion of bearing 204 acting through stationary lower bearing 202, translates into a forward movement of the lower portion of plunger 200 and the saw blade connected thereto. Again, the force of the workpiece acting against the blade creates a biasing force urging the continuous engagement of carriage assembly bearing 224 with face cam 230. Alternatively, a spring may be included to provide the desired bias force.

The saw illustrated in Figure 8 includes an orbital adjustment knob 232 mounted to the housing generally above plunger 200. It is contemplated that the top-mounted orbital adjustment feature of this invention may be utilized with or without the operating handle knob such as shown at 22, Figure 1. It can be appreciated that the two knob alternatives are merely intended to be illustrative and should not be construed as being limited to the respective embodiments upon which each is shown.

Knob 232 includes an annular gear 234 along its bottom surface facing axially downwardly and operatively engaging pinion 236. Pinion 236 is threaded onto stud 238 and is adapted for movement along the stud upon repositioning of knob 232. A stop arm 240 extends upwardly from the carriage assembly and in a manner substantially the same as described above, adjustably limits the carriage assembly travel and orbital blade movement.

Figures 9 and 10 illustrate alternative top-mounted adjustment techniques for limiting the travel of the carriage assemblies of Figures 1 and 8, respectively. Each substitutes a cam integral to the actuator for the pinion gear shown. In Figure 9, face cam 300 on the lower surface of actuator 302 functions as a stop member to limit the counterclockwise travel of the carriage assembly. Figure 10 illustrates an annular cam 310 integrally formed on inward surface of actuator assembly 312 adapted to limit the forward movement of the carriage assembly.

0124198

- 14 -

CLAIMS:
1. A power operated reciprocating saw comprising:

a) a housing;

b) elongated plunger means generally defining a longitudinal axis, bladeholder means on the lower end of the plunger means for mounting a saw blade in axially aligned relationship with the plunger and extending downwardly therefrom;

c) lower swivel bearing means in the housing for holding the plunger for reciprocal movement generally along the longitudinal axis;

d) upper swivel bearing means for holding the plunger for reciprocal movement therein;

e) upper bearing carriage means, having the upper swivel bearing means mounted therein, affixed to the housing for pivotal movement about an axis generally transverse to the longitudinal axis and to the direction of cutting, the pivotal axis being offset from the longitudinal axis;

f) drive means for reciprocating the plunger means generally along the longitudinal axis;

g) means synchronized to the drive means for imparting oscillatory motion to the upper bearing carriage means about said pivotal axis thereby causing the saw blade to describe an orbital path.


2. The power operated reciprocating saw of Claim 1 wherein the upper carriage means includes pivot arm means and the means for imparting oscillatory motion includes pusher means whereby the pusher means is adapted to engage the pivot arm means thereby urging pivotal rotation of the bearing carriage means.

3. A power operated reciprocating saw comprising:

a) a housing;

b) elongated plunger means generally defining a longitudinal axis, bladeholder means on the lower end of the plunger means for mounting a saw blade in axially aligned relationship with the plunger and extending downwardly therefrom;

c) lower swivel bearing means in the housing for holding the plunger for reciprocal movement generally along the longitudinal axis;

d) upper swivel bearing means for holding the plunger for reciprocal movement therein;

e) upper bearing carriage means, having the upper swivel bearing means mounted therein, secured to the housing for oscillatory reciprocal movement along an axis generally parallel to the direction of cutting and transverse to the longitudinal axis, said axis being substantially at the upper end of the plunger;

f) drive means for reciprocating the plunger means generally along the longitudinal axis;

g) means synchronized to the drive means for imparting reciprocal motion to the upper bearing carriage means along said axis thereby causing the saw blade to describe an orbital path.

4. The power operated reciprocating saw of Claim 3 wherein the drive means for reciprocating the plunger includes a gear having a face cam and wherein the bearing carriage means includes cam engaging means whereby the cam urges reciprocal movement of the bearing carriage means.

5. In a power operated reciprocating saw of the orbital type having a housing, a plunger for mounting a saw blade for reciprocal movement along a generally longitudinal axis, upper bearing means and upper bearing carriage means therefor, the carriage means mounted for oscillatory movement within the housing; drive means for reciprocating the plunger, means synchronized to the drive means for oscillating the carriage means thereby causing saw blade to trace out an orbital path;

continuous adjustment means for limiting the movement of the upper bearing carriage means thereby to vary the amount of orbital movement of saw blade.

6. In a power operated reciprocating saw having a housing, a plunger for mounting a saw blade for reciprocal movement along a generally longitudinal axis, upper bearing means in an upper bearing carriage means mounted for oscillatory movement within the housing; drive means for reciprocating the plunger, carriage oscillating means synchronized to the drive means urging movement of the carriage means in a first direction to a predetermined maximum position thereby causing the sawblade to move forwardly into a work piece, means biasing the carriage means for movement in a second return direction against the carriage oscillating means;

means for limiting the return movement of the upper bearing carriage means thereby limiting the non-linear motion of the saw blade.

7. The power operated reciprocal saw of Claim 6 wherein the force imparted by the workpiece against the saw blade comprises the means for biasing the carriage means for movement in a second return direction.

8. The power operated reciprocal saw of Claim 6 wherein the upper bearing carriage means is pivotally mounted to the housing for oscillatory movement about a pivotal axis.

9. The power operated reciprocal saw of Claim 8 in which the carriage oscillating means is a pusher interconnected to the drive means by an eccentric, said pusher acting against the carriage means transverse to, and at a point spaced from, the pivotal axis.

10. The power operated reciprocating saw of Claim 6 wherein the means for limiting the return movement of the carriage means is an adjustable stop means.

11. The power operated reciprocating saw of Claim 10 in which the adjustable stop means may be continuously adjusted between a first position wherein the stop means does not contact the carriage means permitting the carriage means to be biased against the carriage oscillating means at all points throughout the full reciprocal operating cycle for maximum non-linear travel of the saw blade and a second position wherein the stop means continuously contacts the carriage means precluding contact between the carriage means and carriage oscillating means throughout the full reciprocal operating cycle for linear travel of the saw blade.

12. The power operated reciprocating saw of Claim 10 in which the adjustable stop means further includes actuation means on the upper portion of the housing permitting convenient adjustment of the stop means.

13. The power operated reciprocating saw of Claim 12 in which the actuation means is positioned generally above and along the centerline of the plunger and includes auxiliary knob means for grasping the saw during use.

14. The power operated reciprocating saw of Claim 13 wherein the actuation means is concentrically received within, and extends axially through, the auxiliary knob means, the actuation means being accessible at the top of the knob means for rotational movement therein, the knob means being rigidly affixed to the housing.

15. The power operated reciprocating saw of Claim 12 in which the adjustable stop means further includes a pinion gear threaded onto a post rigidly affixed to the housing and arranged to be moved into the path

0124198

of travel of the carriage means, the actuation means causing selective rotation and repositioning of the pinion along the post thereby selectively limiting the return movement of the carriage means.

16. The power operated reciprocating saw of Claim 15 wherein the actuating means includes an annular gear in driving engagement with the pinion gear.

17. The power operated reciprocating saw of Claim 12 in which the adjustable stop means comprises a cam on the actuating means and arrange to be moved into the path of travel of the carriage means, the actuating means causing selective repositioning of the cam thereby selectively limiting the return movement of the carriage means.

FIG.1

1/3

0124198

FIG.2

FIG.3

FIG.4

FIG. 5

FIG. 7

VARI-ORBIT

FIG. 6A

FIG. 6B

FIG. 6C

**FIG. 8**

**FIG. 9**

**FIG. 10**

0124198

European Patent
Office

**EUROPEAN SEARCH REPORT**

Application number

| | **DOCUMENTS CONSIDERED TO BE RELEVANT** | | EP 84300688.3 |
| | | | |

| Category | Citation of document with indication, where appropriate, of relevant passages | Relevant to claim | CLASSIFICATION OF THE APPLICATION (Int. Cl. ³) |
|---|---|---|---|
| X,D | US - A - 3 269 197 (ENDERS)<br>-- | 1-6 | B 27 B 19/09 |
| X,D | US - A - 3 095 748 (STELLJES)<br>-- | 1-6 | |
| A,D | US - A - 4 240 204 (WALTON)<br>-- | | |
| A,D | US - A - 3 890 708 (BAUER)<br>-- | | |
| A,D | US - A - 3 374 814 (KAUFMANN)<br>-- | | |
| A | CH - A - 461 766 (PERLES ELEKTRO-WERKZEUGE UND MOTOREN AG)<br>---- | | |
| | | | **TECHNICAL FIELDS SEARCHED (Int. Cl. ³)**<br>B 27 B<br>B 23 D |

The present search report has been drawn up for all claims

| Place of search | Date of completion of the search | Examiner |
|---|---|---|
| VIENNA | 30-07-1984 | EBERLE |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82